# FASCICULE DE BREVET EUROPEEN

(11) **EP 3 048 891 B1**
(45) Date de publication et mention de la délivrance du brevet: **18.09.2019**
(21) Numéro de dépôt: 14796188.2
(22) Date de dépôt: 24.09.2014
(51) Int. Cl.: A21B 3/13, A21B 3/15

(54) **DISPOSITIF DE PLAQUE SUPPORT DE CUISSON DE PRODUITS DE BOULANGERIE, VIENNOISERIE ET PÂTISSERIE**
TRÄGERPLATTE FÜR BACKWAREN
SUPPORT PLATE FOR PASTRY PRODUCTS

(30) Priorité: 24.09.2013 FR 1359148
(43) Date de publication de la demande: 03.08.2016
(73) Titulaire: MECATHERM, Société Anonyme, 67130 Barembach (FR)
(72) Inventeur: ZORN, Bernard, F-67700 Saverne (FR)
(74) Mandataire: Hugues, Catherine
(86) Numéro de dépôt international: PCT/FR2014/052392
(87) Numéro de publication internationale: WO 2015/044588

(56) Documents cités:
- EP-A1- 2 014 171
- WO-A1-2012/152974
- ES-U- 1 078 030
- FR-A- 1 166 787
- GB-A- 689 943

## Description

Dispositif de plaque support de cuisson de produits de boulangerie, viennoiserie et pâtisserie.

La présente invention concerne un dispositif de plaque support pour la cuisson de produits de boulangerie, viennoiserie ou pâtisserie.

Dans le domaine de la boulangerie, la pâte subit une étape de division en pâtons puis de façonnage de ces derniers qui sont alors déposés sur des plaques support, servant à leur transport, en particulier au travers d'une étape de fermentation et du passage au sein du four de cuisson.

Il existe de nombreux types de plaques de cuisson. En particulier, une plaque peut être constituée d'un matériau support monté solidaire d'un cadre, constituant alors un châssis assurant la rigidité de l'ensemble en vue de sa manutention.

En particulier, le matériau est conformé, notamment par pliage, de manière à ménager des logements de réception desdits pâtons. Une forme spécifique consiste en une ondulation de ce matériau support, formant des logements en creux s'étendant longitudinalement d'un bord à l'autre de la plaque et parallèlement entre eux, deux logements adjacents étant séparés par la crête d'une onde. En outre, les extrémités desdits logements sont ouvertes, s'apparentant à des goulottes ou gouttières reliées les unes aux autres aux niveaux de leurs bords supérieurs contigus.

Dès lors, un même logement peut recevoir sur sa longueur un ou plusieurs pâtons, espacés les uns des autres, en fonction de la longueur de la plaque et des dimensions du ou desdits pâtons. En fonction de sa largeur, une plaque comprend plus ou moins de logements.

Un exemple de plaque correspondant à la description ci-dessus est décrit dans le document ES 1 078 030.

De plus, ledit matériau support est généralement métallique avec un revêtement antiadhésif et peut être constitué d'un treillis ou maillage, ou bien par une tôle, voire plusieurs, chaque tôle étant prévue pleine ou perforée. Dans ce dernier cas, une tôle présente des trous ou orifices réalisés régulièrement sur l'ensemble de sa surface. Ces perforations assurent, d'une part, la bonne transmission par convexion de la chaleur depuis la sole du four vers les produits supportés par la plaque et, d'autre part, l'évacuation par le bas de l'humidité contenue dans la pâte avant et surtout au cours de sa cuisson.

Un exemple de plaque de cuisson perforée est décrit dans le document WO 2012/152974. Une telle plaque est constituée de plusieurs tôles concaves, formant des logements de réception de pâtons et dont les rebords recourbés sont assujettis par emboîtement dans des fentes longitudinales ménagées de part et d'autre du chant supérieur de rails solidaires en partie inférieure d'un cadre, formant un châssis rigidifiant la structure de ladite plaque. On notera que l'emboîtement des rebords des tôles s'effectue sans espacement.

Si les produits cuits sur une plaque perforée ou maillée présentent une qualité de cuisson optimale, les perforations ou le maillage provoquent un marquage du produit par le dessous, lui donnant une impression de cuisson industrielle et lui conférant un aspect peu esthétique.

Afin de résoudre ce problème de marquage, on privilégie la cuisson sur des tôles pleines, conférant un aspect lisse comme si le produit avait été cuit sur pierre. Toutefois, ces tôles pleines présentent d'autres inconvénients.

Dans un premier temps, l'humidité se dégageant sous les pâtons avant et surtout pendant la cuisson ne peut s'évacuer au travers d'une tôle pleine. Le dessous du produit se retrouve alors moins cuit par rapport à son dessus ou ses flancs, ou bien le dessous est cuit correctement, mais le reste du produit l'est trop.

Dans un second temps, sans perforation, la cuisson au niveau inférieur du pâton ne s'effectue plus que par conduction au contact de la plaque, tandis qu'elle se fait essentiellement par rayonnement sur les côtés et le dessus. La convexion verticale ascendante ne traverse plus la plaque, diminuant la qualité de cuisson du produit.

On retrouve cet inconvénient dans un dispositif connu du document FR 1 166 787, décrivant un support de cuisson, qui ne s'apparente pas à une plaque, mais à un moule en deux parties. Un tel moule comprend des cylindres, formant des logements, constitués de deux demi-coquilles hémicylindriques. Lesdites demi-coquilles s'étendent parallèlement dans leur sens longitudinal et sont fixées sur un cadre supérieur et un cadre inférieur. Lesdits cadres sont articulés en rotation à une extrémité, de manière à passer d'une position d'ouverture vers une position de fermeture, et inversement. En position d'ouverture, les pâtons sont déposés au sein des demi-coquilles du cadre inférieur, puis le moule est refermé en venant recouvrir lesdites demi-coquilles du cadre inférieur par les demi-coquilles du cadre supérieur, fermant chaque logement conformé en cylindre. Ces logements sont fermés pour toute la durée des étapes de levage/fermentation et de cuisson.

De ce fait, en particulier pendant la cuisson, chaque cylindre étant fermé, aucun flux d'air chaud ne peut pénétrer par les côtés de chaque cylindre. Pour résoudre ce problème, les plaques pleines ont été partiellement ajourées. En particulier, des orifices longs, formant des fentes, ont été ménagés entre chaque logement, au travers et le long de la crête séparant deux logements adjacents. Ces orifices sont donc ménagés le long de chaque crête, séparés à intervalles réguliers pour conserver la rigidité de la tôle. De tels orifices oblongs présentent une largeur de 2 à 3 millimètres, de manière à constituer des passages pour assurer la circulation ascendante d'une quantité suffisante d'air chaud nécessaire à la bonne cuisson des produits. Si ces orifices oblongs assurent le passage d'un flux d'air chaud ascendant au travers de la plaque, ce chauffage s'effectue alors de façon intermittente le long de ladite plaque, entraînant une cuisson des pâtons qui n'est pas uniforme.

Par ailleurs, un autre inconvénient provient du fait que les plaques pleines subissent des contraintes mécaniques fortes, lors de leur chauffage et de leur refroidissement successifs. En effet, les matériaux constituant la plaque et son cadre se dilatent sous l'effet des hausses de température. Ladite plaque étant fixée au cadre, ces dilatations provoquent généralement des déformations dans le sens longitudinal des logements, ainsi que dans le sens transversal de la plaque, en particulier au niveau des crêtes séparant lesdits logements. Ces déformations souvent ponctuelles sont susceptibles d'endommager la plaque au fil du temps.

De plus, lors du nettoyage de la plaque, une racle ou brosse passe intérieurement le long de chaque logement pour en retirer les résidus de cuisson. Aux niveaux desdites déformations, même minimes, cette racle est susceptible d'érafler le revêtement antiadhésif.

Enfin, en cas de détérioration d'un seul logement sur une plaque, cette dernière devient entièrement inutilisable, nécessitant son remplacement dans son intégralité.

La présente invention a pour but de pallier les inconvénients de l'état de la technique, en proposant un dispositif de plaque support de produits de boulangerie, pâtisserie ou viennoiserie prévue pleine et constituée pour assurer une cuisson optimale des pâtons qu'elle supporte, sans être soumise à des déformations en raison des contraintes mécaniques liées à la dilatation de ces matériaux.

Pour ce faire, il a été imaginé de rendre indépendants les logements au travers de tôles séparées. Cette séparation desdits logements permet alors le passage uniforme et régulier d'un flux ascendant de chauffage par convexion entre les logements, assurant une cuisson optimale des bords des produits.

De plus, cette séparation, rendant les logements indépendants les uns des autres, présente l'avantage de diminuer les contraintes mécaniques appliquées à la plaque, en particulier les déformations liées à la dilatation de son matériau. En effet, les bords longitudinaux supérieurs de chaque logement étant libres, ils peuvent se dilater librement.

Par ailleurs, l'espacement entre les rebords des tôles formant chaque logement s'étendant sur toute la longueur de ces tôles, sa largeur peut-être moindre, inférieur à 2 millimètres, tout en assurant un flux d'air chaud suffisant à la cuisson des produits. Cette largeur moindre permet d'optimiser la taille des dispositifs de plaques, de diminuer leur coût de fabrication et, in fine, d'optimiser les rendements de production.

Ainsi, le dispositif de plaque support pour la cuisson de produits de boulangerie, viennoiserie ou pâtisserie, selon l'invention comprend un cadre sur lequel est fixé un matériau support plein conformé de manière à ménager des logements de réception de pâtons, lesdits logements s'étendant parallèlement entre eux depuis un bord jusqu'au bord opposé de ladite plaque. Cette plaque se caractérise en ce que chaque logement est constitué d'une tôle pleine présentant une section arquée et est constitué d'un élément indépendant par rapport à un autre logement, les bords adjacents de deux logements contigus étant espacés de manière à ménager une fente continue entre eux, ladite fente définissant un passage libre pour un flux ascendant de chauffage par convexion.

Selon d'autres caractéristiques additionnelles, non limitatives, l'invention envisage de fixer chaque logement sur le cadre de façon totalement indépendante, au travers d'une fixation, telle que vissage ou rivetage autorisant un déplacement relatif au moins longitudinalement de chaque logement par rapport audit cadre. De manière avantageuse, cette fixation par vissage ou rivetage est réalisée au travers d'un trou oblong ménagé dans le matériau de chaque logement et/ou dans ledit cadre. Ce déplacement est donc procuré ponctuellement par un jeu dans la fixation qui autorise alors la dilatation du cadre et des logements, au moins selon un sens longitudinal, sans risque de déformation.

Ainsi, chaque tôle d'un logement peut être fixée audit cadre par vissage ou rivetage au travers d'un trou oblong ménagé dans le matériau de chaque logement ou dans ledit cadre, trou oblong autorisant cette mobilité relative entre ce dernier et une tôle.

Avantageusement, ladite plaque peut comprendre au moins deux logements, à savoir que chaque plaque comprend au moins deux tôles juxtaposées, lesdites deux tôles étant espacées par ladite fente continue entre leurs bords longitudinaux adjacents ou contigus.

D'autres caractéristiques et avantages de l'invention ressortiront de la description détaillée qui va suivre des modes de réalisation non limitatifs de l'invention, en référence aux figures annexées, dans lesquelles :
- la figure 1 représente une vue schématisée en perspective d'un exemple d'une plaque support spécifique à la mise en oeuvre du procédé selon l'invention ;
- la figure 2 représente une vue schématisée en perspective d'un détail d'une telle plaque support, montrant la fixation des logements sur le cadre servant de châssis; et
- la figure 3 représente une vue schématisée selon une coupe verticale de la figure 2, montrant une fixation par rivetage des tôles d'un premier logement sur le cadre, et un second logement avant fixation.

La présente invention concerne la cuisson de produits de boulangerie, viennoiserie ou pâtisserie. De tels produits se présentent avant cuisson sous la forme de pâtons 1, obtenus par division d'une pâte.

En vue de leur traitement, ces pâtons 1 sont déposés sur un dispositif de plaque support, à savoir une plaque 2, constituant un support qui peut être plus aisément manutentionné.

Plus précisément, une plaque 2 comprend un cadre 3. Ce dernier peut être constitué d'un assemblage de profilés, formant ainsi un châssis assurant la rigidité de l'ensemble de la plaque 2. Sur ce cadre 3 est fixé un matériau support plein, à savoir sans perforations. Ce matériau support vient recouvrir au moins en partie ledit cadre 3. C'est ce matériau support plein qui va recevoir les pâtons 1, au cours de différentes étapes de leur traitement, au moins au cours de leur cuisson. Un tel matériau support est métallique, généralement recouvert d'un revêtement antiadhésif.

De plus, ledit matériau support est conformé de manière à ménager des logements 4 de réception desdits pâtons 1. Ces logements 4 s'étendent parallèlement entre eux, depuis un bord jusqu'au bord opposé de ladite plaque 2. Ils permettent ainsi de recevoir un pâton 1 long ou plusieurs pâtons 1 plus petits et disposés à distance les uns des autres en fonction de leur gonflement à la cuisson, mais aussi lors d'étapes préalables, comme lors de la fermentation.

Selon le mode préférentiel de réalisation, comme représenté sur les figures, les logements 4 sont conformés en creux, avec une section arquée, concave en face supérieure. Ils s'apparentent alors à des goulottes ou gouttières, au fond desquels sont déposés le ou les pâtons 1.

On notera qu'une telle plaque 2 peut comprendre au moins deux logements 4, voire plus.

Avantageusement, afin d'améliorer la cuisson des pâtons 1 reposant dans les logements 4 de chaque plaque 2, l'invention prévoit de séparer et rendre indépendants les logements 4 entre eux. Ainsi, cette spécificité de la plaque 2 se traduit par le fait que chaque logement 4 est constitué d'une tôle pleine 5 présentant une section arquée et par le fait que les bords adjacents 6 de deux logements 4 contigus sont espacés de manière à ménager une fente continue 7 entre eux. On entend par continue une fente qui s'étend sans interruption d'une extrémité à l'autre de la plaque 2. En somme, chaque logement 4 est constitué d'un élément indépendant par rapport à un autre logement 4, deux logements 4 étant séparés par une fente 7.

Dès lors, les fentes 7 entre chaque logement 4 assurent le passage du fluide ascendant de chauffage par convexion, au cours de la cuisson, permettant de chauffer les bords des pâtons 1 et de mieux évacuer l'humidité que ces derniers contiennent, surtout au niveau de leur partie inférieure.

En outre, ces fentes 7 séparent totalement les logements 4, qui, n'étant plus liés entre eux, peuvent subir une dilatation sans contrainte au niveau de leurs bords longitudinaux libres, empêchant tout risque de déformation dans ce sens de dilatation.

Selon un mode préférentiel de réalisation, chaque fente peut avoir une largeur de un à plusieurs millimètres, voire un à plusieurs centimètres.

Par ailleurs, selon une caractéristique additionnelle, afin de diminuer les risques de déformation dans l'autre sens, à savoir le sens longitudinal, chaque tôle 5 d'un logement 4 est fixée audit cadre 3 avec une mobilité relative au moins dans ce sens longitudinal par vissage ou rivetage. Avantageusement, cette fixation est effectuée au travers d'un trou oblong 8 ménagé dans la tôle 5 d'un logement 4 et/ou dans ledit cadre 3 autorisant un jeu relatif entre ladite tôle 5 et ce cadre 3, au travers de la vis ou du rivet.

Par exemple, ledit trou oblong 8 consiste en un orifice ménagé au travers de chaque tôle 5, en vis-à-vis du profilé du cadre 3 situé en dessous et sur lequel va être fixée ladite tôle 5. Ce trou 8 est prévu oblong, formant une ellipse pour, d'une part, assurer le maintien de la tôle 5 par le rivet ou la vis 9 au niveau de sa largeur la plus petite et, d'autre part, permettre le déplacement en translation de la tôle 5 par rapport au cadre 3 au niveau de sa largeur la plus grande.

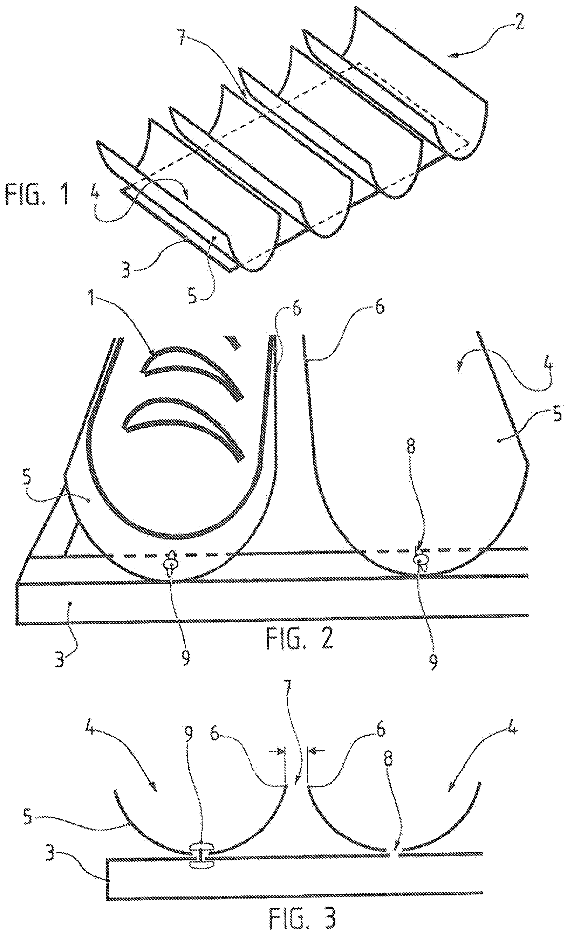

Selon le mode de réalisation préférentiel, représenté sur la figure 2, le trou oblong 8 présente sa largeur la plus grande orientée selon l'axe longitudinal dudit logement 4.

En outre, deux trous 8 de fixation peuvent être réalisés à chaque extrémité de chaque logement 4. Toutefois, un seul d'entre eux peut être prévu oblong à une seule extrémité pour assurer ce jeu et autoriser le déplacement de la tôle 5 lors de sa dilatation. De préférence, les deux trous 8 peuvent être prévus oblongs.

Ainsi, la plaque 2 selon l'invention, constituée d'un cadre et d'un matériau support plein définissant des logements 4 distincts et physiquement espacés les uns des autres, assure une cuisson améliorée des produits de boulangerie, viennoiserie et pâtisserie. Par ailleurs l'absence de trou ou perforation, au niveau des logements permet d'obtenir un aspect esthétique et qualitatif du produit finis comme s'il avait été cuit sur pierre.

De plus, cette conception séparée des tôles 5 constituant les logements 4, diminue les risques de déformation de ladite plaque 2, augmentant sa durée de vie. En outre, un logement 4 dont la tôle 5 serait détériorée peut être changé seul, diminuant les coûts d'entretien.

## Revendications

1. Dispositif de plaque support (2) pour la cuisson de produits de boulangerie, viennoiserie ou pâtisserie, comprenant un cadre (3) sur lequel est fixé un matériau support plein conformé de manière à ménager des logements (4) de réception de pâtons (1), lesdits logements (4) s'étendant parallèlement entre eux depuis un bord jusqu'au bord opposé de ladite plaque (2), où chaque logement (4) est constitué d'une tôle (5) pleine présentant une section arquée et est constitué d'un élément indépendant par rapport à un autre logement (4), **caractérisé en ce que** les bords adjacents (6) de deux logements (4) contigus étant espacés de manière à ménager une fente (7) continue entre eux, ladite fente (7) définissant un passage libre pour un flux ascendant de chauffage par convexion.

2. Dispositif de plaque support (2) selon la revendication 1, **caractérisé par le fait que** chaque tôle (5) d'un logement (4) est fixée au travers d'une fixation, telle que vissage ou rivetage autorisant au moins un déplacement longitudinal relatif de chaque logement (4) par rapport audit cadre (3).

3. Dispositif de plaque support (2) selon la revendication 2, **caractérisé par le fait que** chaque tôle (5) d'un logement (4) est fixée audit cadre (3) par vissage ou rivetage au travers d'un trou oblong (8) ménagé dans le matériau de chaque logement (4), autorisant un jeu entre ladite tôle (5) et ledit cadre (3).

4. Dispositif de plaque support (2) selon la revendication 2, **caractérisé par le fait que** chaque tôle (5) d'un logement (4) est fixée audit cadre (3) par vissage ou rivetage au travers d'un trou oblong (8) ménagé dans ledit cadre (3) autorisant un jeu entre ladite tôle (5) et ledit cadre (3).

5. Dispositif de plaque support (2) selon l'une quelconque des revendications précédentes, **caractérisé par le fait que** ladite plaque support (2) comprend au moins deux logements (4).

## Patentansprüche

1. Trägerplattenvorrichtung (2) zum Backen von Bäckerei- oder Konditoreierzeugnissen, umfassend ein Gestell (3), auf dem ein massives Trägermaterial befestigt ist, das zum Unterbringen von Gehäusen (4) zur Aufnahme von Teiglingen (1) ausgestaltet ist, wobei sich die Gehäuse (4) parallel zueinander von einer Kante zur gegenüberliegenden Kante der Platte (2) erstrecken, wobei
jedes Gehäuse (4) aus einem massiven Blech (5) mit rundem Querschnitt besteht und aus einem Element besteht, das von einem anderen Gehäuse (4) unabhängig ist,
**dadurch gekennzeichnet, dass**
die benachbarten Kanten (6) von zwei aneinander angrenzenden Gehäusen (4) derart voneinander beabstandet sind, dass zwischen ihnen ein durchgehender Schlitz (7) gebildet wird, wobei der Schlitz (7) einen Durchgang eines aufsteigenden Stroms einer Konvektionsheizung definiert.

2. Trägerplattenvorrichtung (2) nach Anspruch 1, **dadurch gekennzeichnet, dass** jedes Blech (5) eines Gehäuses (4) über ein Befestigungsmittel, z.B. Verschraubung oder Vernietung, relativ zum Gestell (3) befestigt ist, was eine relative längliche Verschiebung jedes Gehäuses (4) relativ zum Gestell (3) ermöglicht.

3. Trägerplattenvorrichtung (2) nach Anspruch 2, **dadurch gekennzeichnet, dass** jedes Blech (5) eines Gehäuses (4) durch Verschraubung oder Vernietung über ein im Material jedes Gehäuses (4) ausgebildetes, längliches Loch auf dem Gestell (3) befestigt wird, wodurch ein Spielraum zwischen dem Blech (5) und dem Gestell (3) ermöglicht wird.

4. Trägerplattenvorrichtung (2) nach Anspruch 2, **dadurch gekennzeichnet, dass** jedes Blech (5) eines Gehäuses (4) durch Verschraubung oder Vernietung über ein im Gestell (3) ausgebildetes, längliches Loch (8) befestigt wird, wodurch ein Spielraum zwischen dem Blech (5) und dem Gestell (3) ermöglicht wird.

5. Trägerplattenvorrichtung (2) nach einem der vorstehenden Ansprüche, **dadurch gekennzeichnet, dass** die Trägerplatte (2) mindestens zwei Gehäuse (4) umfasst.

## Claims

1. A support plate device (2) for baking bakery, pastry or cake products, comprising a frame (3) on which a solid support material is fixed configured so as to arrange housings (4) for receiving dough rolls (1), said housings (4) extending parallel to one another from one edge to an opposite edge of said plate (2), where each housing (4) is made up of a solid sheet (5) having an arched section and is made up of an independent element relative to another housing (4), **characterized in that** the adjacent edges (6) of two neighboring housings (4) being spaced apart so as to form a continuous slot (7) between them, said slot (7) defining a free passage (7) for a rising heat flow by convection.

2. The support plate device (2) according to claim 1, **characterized in that** each sheet (5) of a housing (4) is fixed through a fastening, such as screwing or riveting, allowing at least a relative longitudinal movement of each housing (4) relative to said frame (3).

3. The support plate device (2) according to claim 2, **characterized in that** each sheet (5) of a housing (4) is fixed to said frame (3) by screwing or riveting through an oblong hole (8) arranged in the material of each housing (4), allowing a play between said sheet (5) and said frame (3).

4. The support plate device (2) according to claim 2, **characterized in that** each sheet (5) of a housing (4) is fixed to said frame (3) by screwing or riveting through an oblong hole (8) arranged in said frame (3) allowing a play between said sheet (5) and said frame (3).

5. The support plate device (2) according to any one of the preceding claims, **characterized in that** said support plate (2) comprises at least two housings (4).
